# EUROPÄISCHE PATENTSCHRIFT

(11) **EP 1 167 826 B1**
(45) Veröffentlichungstag und Bekanntmachung des Hinweises auf die Patenterteilung: **10.11.2004**
(21) Anmeldenummer: 01104792.5
(22) Anmeldetag: 27.02.2001
(51) Int. Cl.: F16H 55/17, F16H 55/08

(54) **Zahnrad**
Gear
Roue dentée

(30) Priorität: 01.07.2000 DE 10032061
(43) Veröffentlichungstag der Anmeldung: 02.01.2002
(73) Patentinhaber: Alpha Getriebebau GmbH, 97999 Igersheim (DE)
(72) Erfinder: Surbaeck, Peter, 74177 Bad Friedrichshall (DE)
(74) Vertreter: Pfusch, Volker, Dipl.-Ing.

(56) Entgegenhaltungen:
- DE-A- 3 721 949
- DE-A- 3 934 841
- DE-A- 19 737 112

## Beschreibung

Die Erfindung betrifft ein Zahnrad nach dem Oberbegriff des Patentanspruches 1.

Ein solches Zahnrad ist aus dem gattungsgemässen Dokument DE 3 934 841 A bekannt.

Bei derartigen Zahnrädern beschäftigt sich die Erfindung mit dem Problem, eine einfach und sicher zu handhabende Möglichkeit für ein Ausrichten dieses Zahnrades beim Befestigen an einem mit insbesondere einem Genaüigkeitsgetriebe zusammenarbeitenden Bauteil zu schaffen, bei der das Ausrichten mit Bezug auf die feinbearbeiteten Zahnflanken erfolgt.

Zu diesem Zweck ist ein gattungsgemäßes Zahnrad erfindungsgemäß nach dem kennzeichnenden Merkmal des Anspruchs 1 ausgebildet.

Vorteilhafte Ausgestaltungen sind Gegenstand der Unteransprüche.

Die Erfindung beruht auf dem allgemeinen Gedanken, ein Zahnrad mit insbesondere fein geschliffenen Zahnflanken bei der Befestigung an einem mit insbesondere einem Genauigkeitsgetriebe zusammenarbeitenden Bauteil auf einfache Weise mit Bezug auf die Form der feinbearbeiteten Zahnflanken zentrisch ausrichten zu können und hierfür eine entsprechende Ausricht- bzw. Meßfläche an zumindest einzelnen der Zahnköpfe zu besitzen. Dabei dürfen die Ausricht- bzw. Meßflächen keine Toleranzabweichung gegenüber den feinbearbeiteten Zahnflanken aufweisen. Erreicht wird dies dadurch, daß die Zahnflanken und die erfindungsgemäßen Ausricht- bzw. Meßflächen an den mindestens einzelnen Zahnköpfen gleichzeitig mit einem gleichen Werkzeug, beispielsweise einer entsprechend geformten Schleifscheibe, feinbearbeitet werden. Auf diese Weise können zwischen Meßfläche und Zahnflanken keine Toleranzabweichungen auftreten.

Die erfindungsgemäße Lehre kann grundsätzlich dadurch verwirklicht sein, daß der Zahnkopf über seine gesamte Länge als Ausricht- bzw. Meßfläche ausgebildet ist.

Besonders zweckmäßig ist es allerdings, lediglich einen mit Bezug auf die Länge eines Zahnkopf begrenzten Zahnkopfbereich als Ausricht- bzw. Meßfläche auszubilden, da für den Zweck eines Ausrichtens bereits ein relativ kleiner Meßflächenbereich ausreicht.

Der Meßflächenbereich ist insbesondere erhaben auf den betreffenden Zahnköpfen ausgebildet. Bei einer Feinbearbeitung durch Schleifen mit einer Formschleifscheibe wird von der Schleifscheibe auf den Zahnkopf lediglich der erhaben ausgebildete Meßflächenbereich geschliffen, während die übrigen Zahnkopfbereiche von der Schleifscheibe nicht erfaßt werden.

Dies hat den Vorteil, daß lediglich in dem erhabenen Meßflächenbereich eines Zahnkopfes eine gegenüber der zu schleifenden Zahnflanke größere Schleiffläche gegeben ist. Dadurch entsteht insgesamt eine geringere Schleifwärme im Vergleich zu einer Ausführung, bei der die betreffenden Zahnköpfe über die gesamte Länge fein geschliffen werden.

Erfindungsgemäß ausgebildete Zahnräder eignen sich insbesondere für einen stirnseitigen Anbau an ein mit einem spielarmen Getriebe zusammenarbeitenden Bauteil. Gedacht ist dabei insbesondere an eine stirnseitige Befestigung, bei der ein erfindungsgemäßes Zahnrad flanschartig montiert wird, das heißt über umfangsmäßig verteilte, das Zahnrad axial durchdringende Schrauben an ein anderes Bauteil angeschraubt ist. Bei einer derartigen Befestigungsart wird ein erfindungsgemäßes Zahnrad nicht formschlüssig montiert, sondern reib- und/oder stoffschlüssig. Reib- und/oder stoffschlüssig bedeuten hier, daß vor der Verwirklichung des Reib- und/oder Stoffschlusses ein Ausrichten des Zahnrades in dessen an einem anderen Bauteil anliegenden Stirnfläche möglich ist. Im vorliegenden Fall erfolgt dieses Ausrichten über die erfindungsgemäß an zumindest einzelnen Zahnköpfen vorgesehenen Ausricht- bzw. Meßflächen. Erst nachdem ein entsprechendes Ausrichten erfolgt ist, wird der endgültige Reib- und/oder Stoffschluß durch Anziehen der das Zahnrad axial durchdringenden Schrauben realisiert.

Anstelle oder zusätzlich zu einem derartigen Reibschluß kann an den Berührungsflächen zwischen Stirnseite des Zahnrades und dem angrenzenden Bauteil eine Verklebung erfolgen, wobei allerdings vor Erreichen des festen Verklebezustandes die vorstehend betriebene Ausrichtung in der Verklebeebene möglich sein muß.

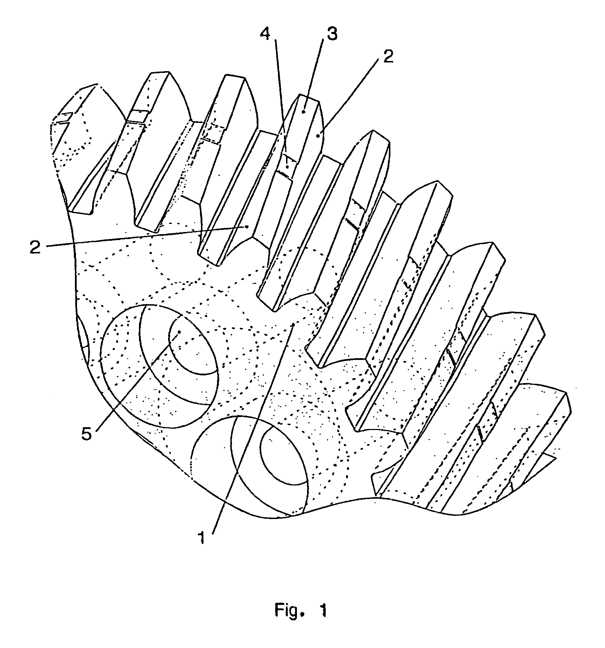

Ein Ausführungsbeispiel der Erfindung ist in der Zeichnung dargestellt. In dieser zeigt die einzige
- Fig. 1: eine perspektivische Ansicht eines Zahnes eines Stirnradzahnrades.

Bei dem lediglich einen dargestellten Zahn 1 eines stirnrad des sind die kraftübertragenden Zahnflanken 2 feinbearbeitet. Das Material des Zahnrades ist Metall und die Feinbearbeitung erfolgt durch Schleifen an bis auf diese Feinbearbeitung vorbearbeiteten Flächen.

Das Feinbearbeiten durch Schleifen erfolgt durch eine Formschleifscheibe, die in Achsrichtung des Zahnrades während der Bearbeitung verschoben wird.

Auf zumindest einigen der Zähne 1 ist auf dem jeweiligen Zahnkopf 3 eine mit Bezug auf die Länge des Zahnes 1 begrenzte, erhabene Meßfläche 4 vorgesehen, die beispielsweise etwa 0,1 bis 0,2 mm aus der übrigen Fläche des Zahnkopfes 3 herausragt.

Die zur Feinbearbeitung der Zahnflanken 2 eingesetzte Formschleifscheibe besitzt eine solche Form, daß gleichzeitig beim Schleifen der Zahnflanken 2 auch die Meßfläche 4 geschliffen wird. Dadurch wird die Meßfläche 4 toleranzfrei gegenüber den Zahnflanken 2 erzeugt.

Ein erfindungsgemäßes Zahnrad, das stirnseitig an ein Bauteil angesetzt wird, kann beispielsweise über den Umfang des Zahnrades verteilte, achsparallele Bohrungen 5 aufweisen, durch die eine Verschraubung des Zahnrades gegenüber einer stirnseitigen Anlagefläche erfolgen kann. Dabei ist zwischen den Bohrungen 5 und den diese durchgreifenden Schrauben ein gewisses radiales Spiel vorzusehen, damit eine Ausrichtung des Zahnrades über dessen Stirnseite an einem angrenzenden Bauteil vor einer Befestigung des Zahnrades an diesem Bauteil möglich ist. Bei einer derartigen Verschraubung wird eine kraft- bzw. reibschlüssige Verbindung erzielt, die durch eine Verklebung noch eine zusätzliche Festigkeit erhalten kann.

## Patentansprüche

1. Zahnrad mit stirnseitigen Anschlussbohrungen für eine ausschließlich stirnseitige Anbindung an ein mit einem Genauigkeitsgetriebe zusammenarbeitendes Bauteil mit umfangsmäßig angeordneten Zähnen, deren kraftübertragende Flanken in aufeinanderfolgenden Schritten materialabtragend bearbeitet sind, wobei vorausgehenden Bearbeitungsschritten eine Feinbearbeitung durch insbesondere Schleifen folgt,
**gekennzeichnet durch** die Merkmale
- zumindest einzelne Zahnköpfe (3) besitzen jeweils einen radial überstehenden Teilbereich (4) mit Bezug auf ihre Länge,
- die radial überstehenden Teilbereiche (4) weisen eine mit den Zahnflanken (2) übereinstimmende, gegeneinander toleranzfreie Feinbearbeitungsgenauigkeit auf.

## Claims

1. A gearwheel having connecting boreholes on the end face for a connection only on the end face to a component that cooperates with a precision gear having teeth arranged on the periphery, the force-transmitting profiles of these teeth being machined by cutting in successive steps, whereby preceding machining steps are followed by a precision machining by grinding in particular,
**characterized by** the features
- at least individual tooth heads (3) have a radially protruding partial area (4) with respect to their length,
- the radially protruding partial areas (4) have a precision machining accuracy that matches the tooth profiles (2), so there is no tolerance in this regard.

## Revendications

1. Roue dentée comportant des trous de raccordement frontaux pour une liaison exclusivement frontale sur un composant coopérant avec un engrenage de précision, comprenant des dents disposées sur le pourtour dont les flancs transmettant les forces sont usinés par enlèvement de matière dans des phases successives, un finissage en particulier par meulage faisant suite à des phases d'usinage précédentes, **caractérisé par** les particularités
- au moins quelques-uns des sommets de dents (3) présentent chacun une zone partielle (4) en saillie radiale par rapport à leur longueur,
- les zones partielles (4) en saillie radiale présentent une précision de finition en conformité avec les flancs de dents (2), sans tolérance mutuelle.
